# EUROPEAN PATENT SPECIFICATION

(11) **EP 4 580 937 B1**
(45) Date of publication and mention of the grant of the patent: **07.10.2026**
(21) Application number: 23771933.1
(22) Date of filing: 30.08.2023
(51) Int. Cl.: B63H 21/17, B63B 1/26, B63B 1/28, B63B 1/12, B63C 1/12

(54) **INTEGRATED SYSTEM FOR THE TRANSPORT OF PASSENGERS OR GOODS, WHICH COMPRISES A DEVICE FOR THE RAPID REPLACEMENT OF BATTERIES FOR VESSELS**
INTEGRIERTES SYSTEM FÜR DEN TRANSPORT VON PASSAGIEREN ODER WAREN MIT EINER VORRICHTUNG ZUM SCHNELLEN AUSWECHSELN VON BATTERIEN FÜR SCHIFFE
SYSTÈME INTÉGRÉ POUR LE TRANSPORT DE PASSAGERS OU DE MARCHANDISES QUI COMPREND UN DISPOSITIF POUR LE REMPLACEMENT RAPIDE DE BATTERIES POUR NAVIRES

(30) Priority: 01.09.2022 IT 202200017979
(43) Date of publication of application: 09.07.2025
(73) Proprietor: GerrisBoats S.r.l., 16033 Lavagna (GE) (IT)
(72) Inventor: VERME, Massimo, 16033 Lavagna (GE) (IT); ROSSI, Roberto, 16033 Lavagna (GE) (IT)
(74) Representative: Bottino, Giovanni
(86) International application number: PCT/IB2023/058559
(87) International publication number: WO 2024/047545

(56) References cited:
- EP-A1- 0 648 668
- WO-A1-2021/234748
- KR-A- 20220 069 133
- US-A- 2 491 744

## Description

The present invention relates to an integrated system for the transport of passengers or goods based on a vessel described by a previous invention WO2021/234748. Therefore, the vessel constitutes the known art. Such a vessel comprises one or more submerged bodies which generate a hydrostatic thrust in all navigation conditions, a wing system which generates a hydrodynamic thrust only when the vessel is in motion and exceeds the take-off speed, an upper portion of the vessel provided with a hull and a superstructure, in which passengers and goods are housed, and in which the control panel is placed, one or more pylons which connect the torpedo and the wings to the vessel, and finally moving volumes which rise and fall to contribute to keeping the vessel raised when it is stationary or moving slowly at a speed lower than that of take-off. In practice, the upper part of the vessel is capable of maintaining a fixed height above the surface of the sea, both at cruising speed, supported by submerged bodies and by wings, and at low or stationary speeds, supported by submerged bodies and those moving. In particular, the present invention relates to an infrastructure for disembarking and embarking passengers or goods, which, together with the peculiar feature of this vessel to navigate at a fixed height in a stable manner in all speed and sea conditions, allow the rapid replacement of batteries and routine maintenance. The final object is to optimise the size of the batteries in order to be able to cover a stretch between two or more landings. Once the vessel is docked, it can disembark the passengers and replace the batteries. The replaced batteries will remain at the landing for recharging, while the vessel with the recharged batteries will continue to the next landing. Obviously, the recharging time of the batteries must be that which elapses between the docking of two vessels. Thereby the weight of the batteries will be the minimum necessary and the vessel will be light. The possibility of changing the batteries in little time increases the autonomy which will thereby become infinite.

The drawbacks of a hybrid system, in other words provided with internal combustion engines and electric motors powered by batteries, are evident. During navigation, the internal combustion engines push the vessel to cruising speed and use the excess power part to charge the batteries. During the last few miles before docking, the vessel uses the electric motor. Such a system is inefficient from the point of view of efficiency and energy balance, because it is not optimized for either internal combustion navigation or for electric navigation.

The drawbacks of a fully electric system are that it has a limited autonomy, with very long battery charging times, with respect to the stopping time.

The problem to be solved by the present invention is to make a system in which it is possible to: quickly disembark passengers. Release a part of the vessel in which the batteries are contained (in one of the possible embodiments the batteries are contained in the submerged body and the pylon is flanged to the upper part of the vessel). Move the upper part of the vessel onto a pylon and a submerged body, containing the charged batteries. Again fix the lower part to the upper one. Quickly board passengers and continue navigation. The batteries released with the pylon and the submerged body are charged, waiting for the next vessel to arrive.

The problem of the low efficiency of the hybrid system, or of the low autonomy, and of the long charging times of the fully electric system is therefore solved with an integrated system according to claim 1, in which a vessel capable of maintaining a fixed height, docks at a station, unloads the goods or passengers, replaces part thereof in which the batteries are contained, boards passengers for the next destination, and departs for the next landing, thereby obviating the problems of the prior art.

Further features and advantages of the integrated navigation system according to the present invention will be apparent from the following description of a preferred embodiment thereof, given by way of non-limiting example, with reference to the accompanying figures, in which:
- figure 1 is a front view of the vessel;
- figure 2 is a side view of the vessel;
- figure 3 is a top view of the vessel;
- figure 4 is a top view of the vessel showing the internal layout, in particular the space for 80 passengers;

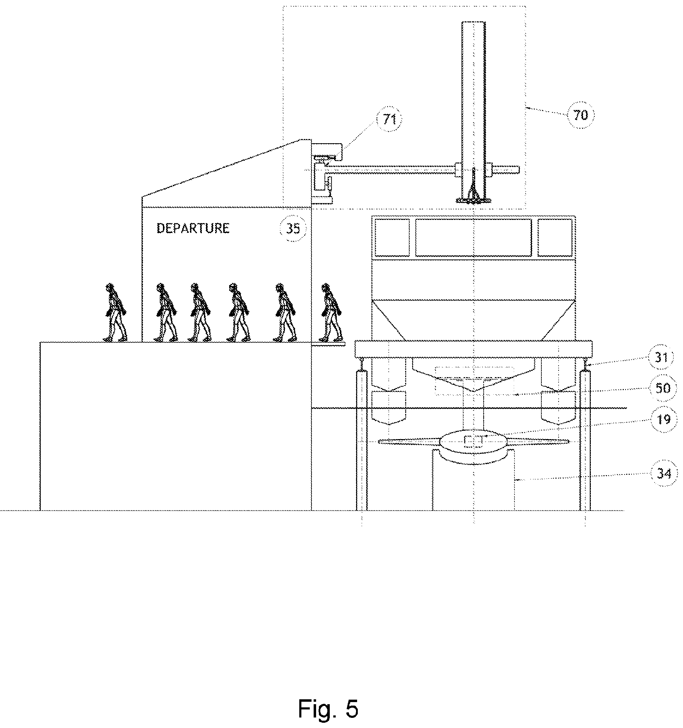

- figure 5 is a front view of the integrated system with the vessel in the arrival or departure position;

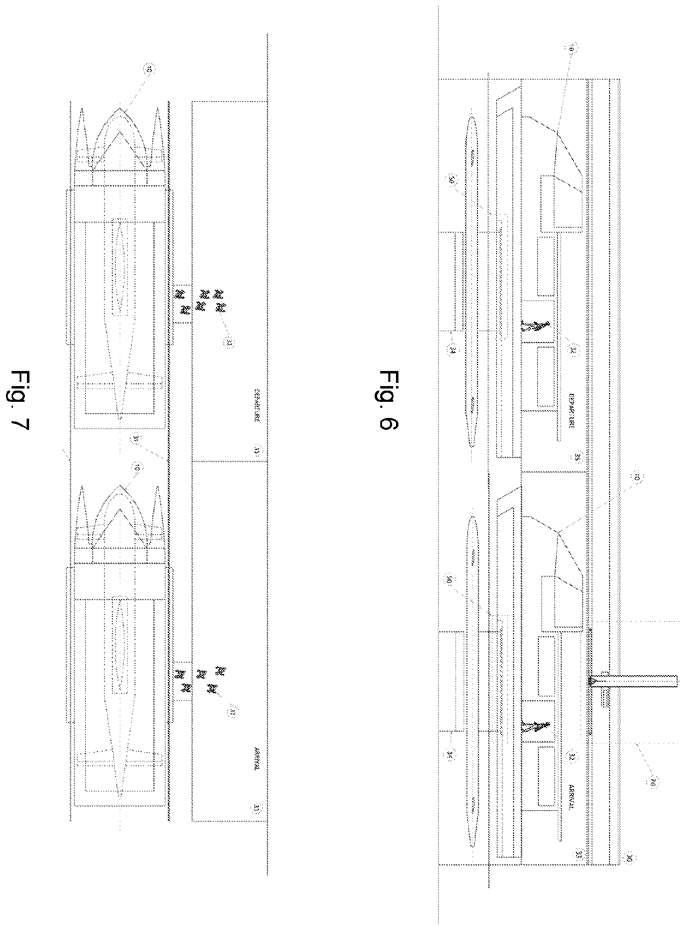

- figure 6 is a side view of the integrated system with the vessel in the arrival, and departure position;
- figure 7 is a top view of the integrated system with the vessel in the arrival, and departure position;

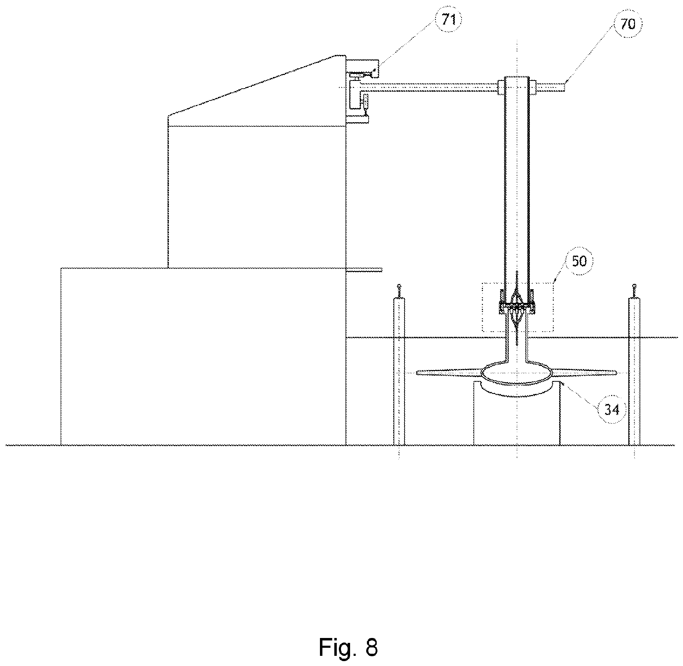

- figure 8 is a front view of the integrated system showing the movement and charging system of the part of the vessel containing the batteries.

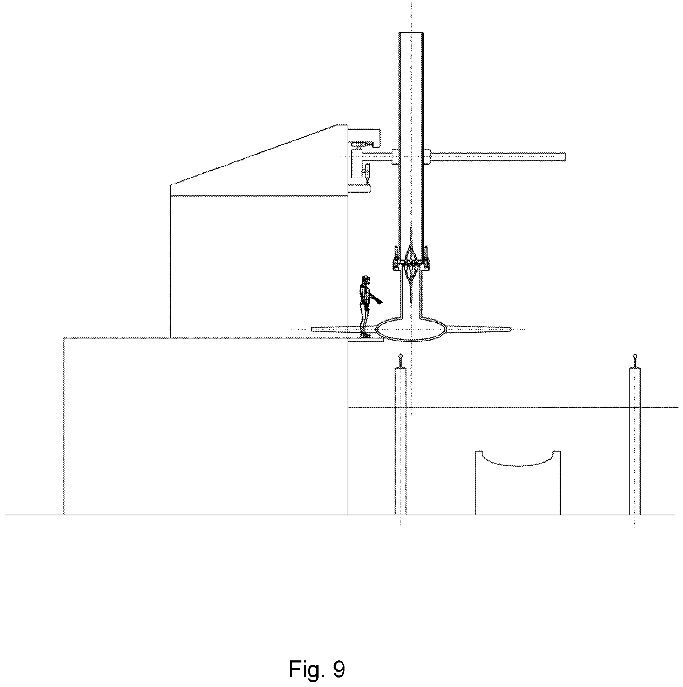

- figure 9 is a front view of the integrated system showing the movement system which carries the lower part of the vessel to an area where maintenance can easily be performed.

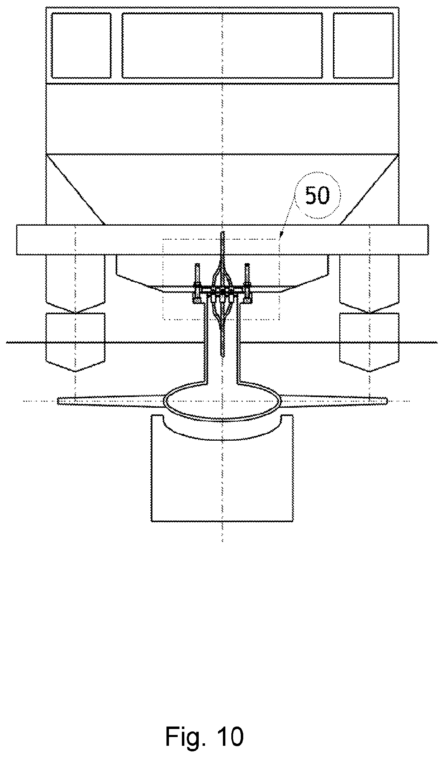

- figure 10 is a section of the vessel at the quick-release coupling system, in which the lower and upper parts are connected to each other.

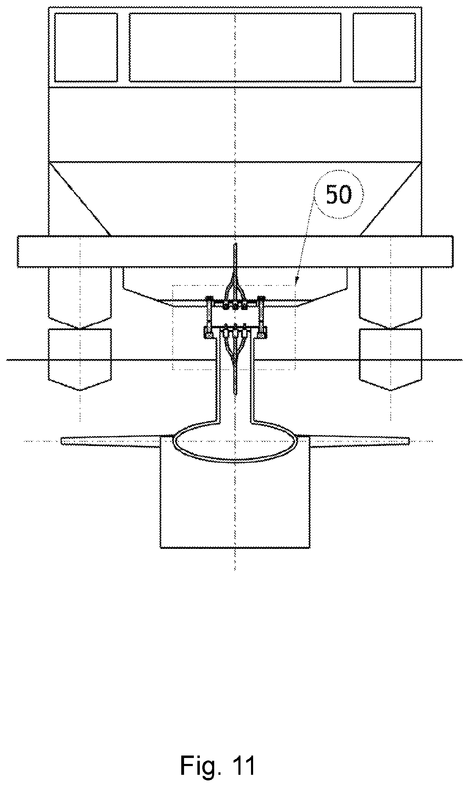

- figure 11 is a section of the vessel at the quick-release coupling system, in which the lower and upper parts are disconnected from each other. The lower part rests on the saddle but the nuts are still gripping on tie rods.

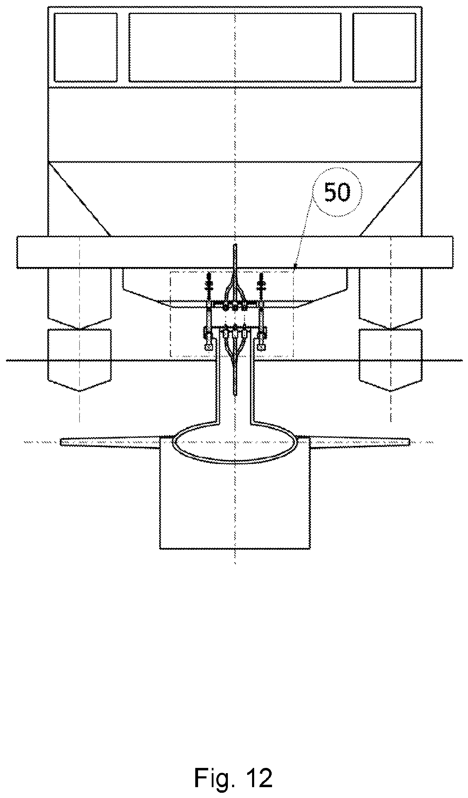

- figure 12 is a section of the vessel at the quick-release coupling system, in which the lower and upper parts are disconnected from each other. The lower part rests on the saddle, the nuts have been removed, and the tie rods have been lowered to allow the displacement of the vessel.

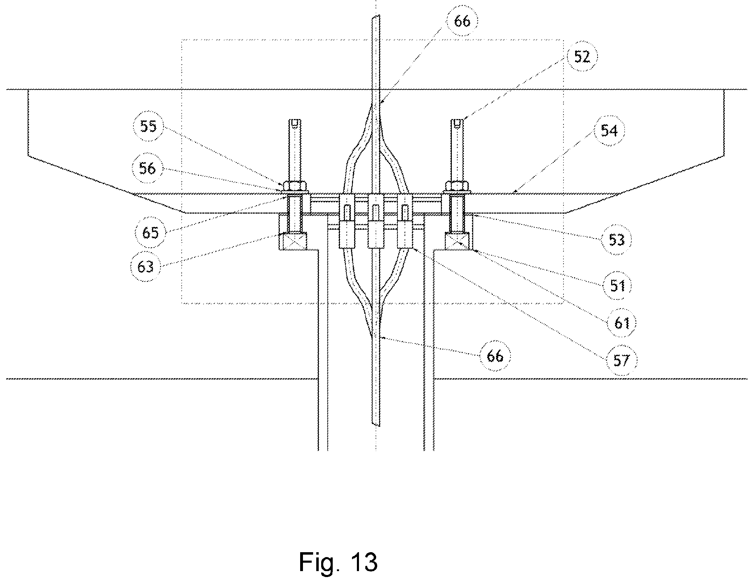

- figure 13 is a detailed section of the quick-release coupling system, in which the lower and upper parts of the vessel are connected to each other.

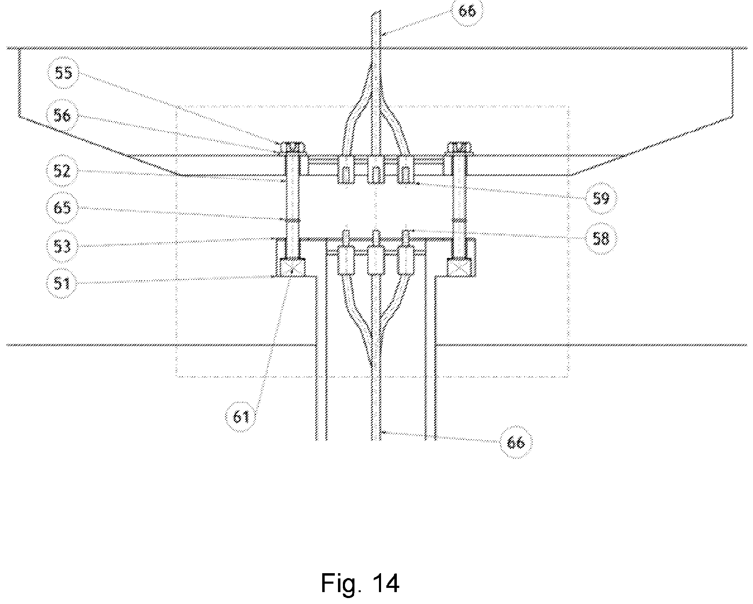

- Figure 14 is a detailed section of the quick-release coupling system, in which the lower and upper parts of the vessel are disconnected from each other. The lower part rests on the saddle but the nuts are still gripping on tie rods.

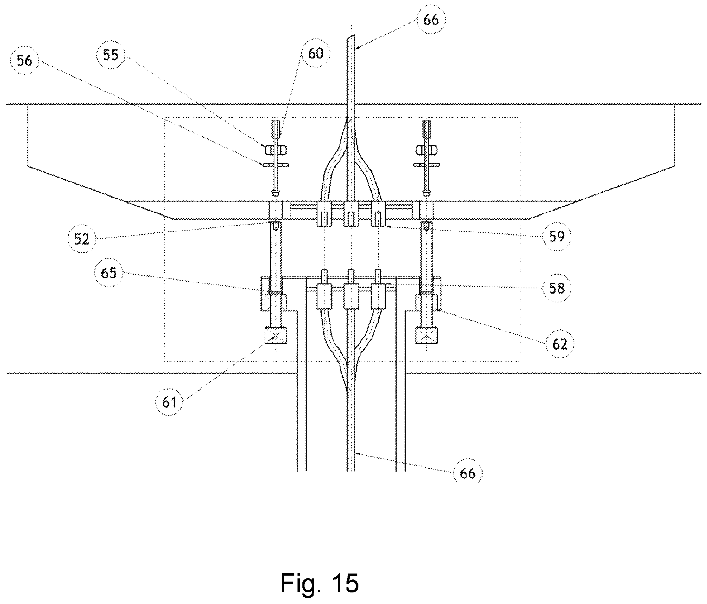

- Figure 15 is a detailed section of the quick-release coupling system, in which the lower and upper parts of the vessel are disconnected from each other. The lower part rests on the saddle, the nuts have been removed, and the tie rods have been lowered to allow the displacement of the vessel.

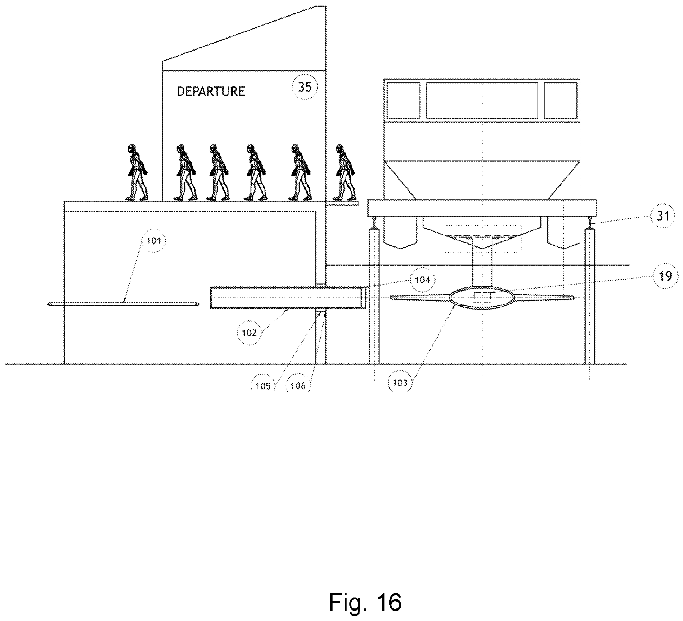

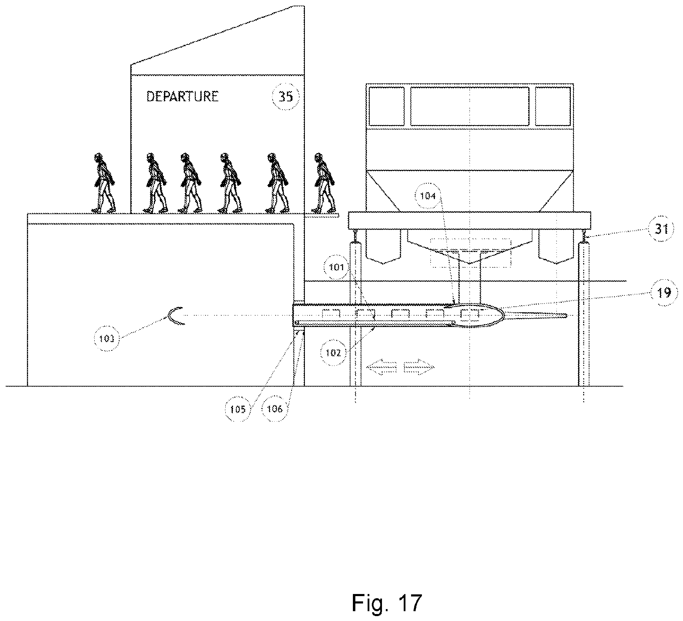

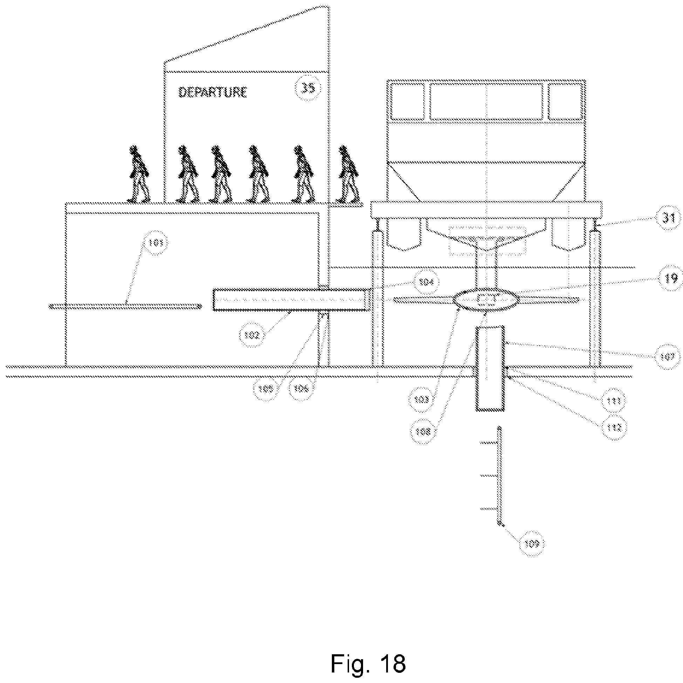

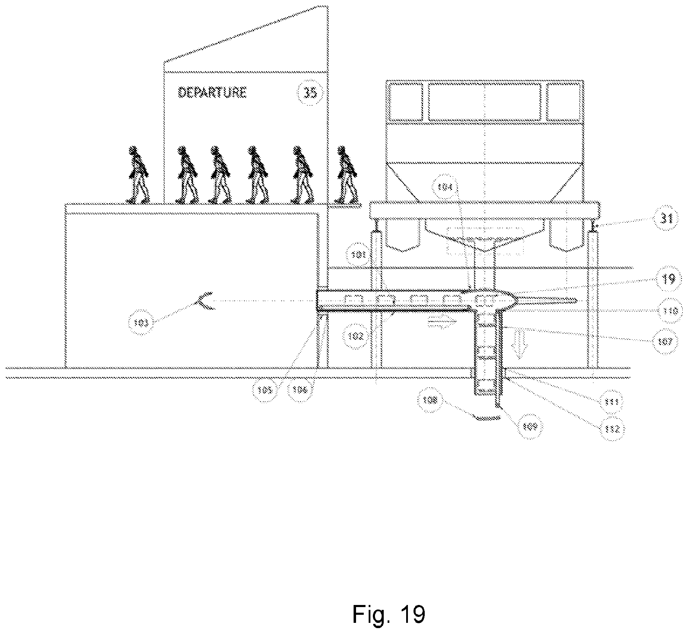

- Figs. 16,17,18,19 show an embodiment of the invention in which the lower part of the vessel is not disassembled but the batteries are replaced by means of conveyor belts contained in a movable pipe.

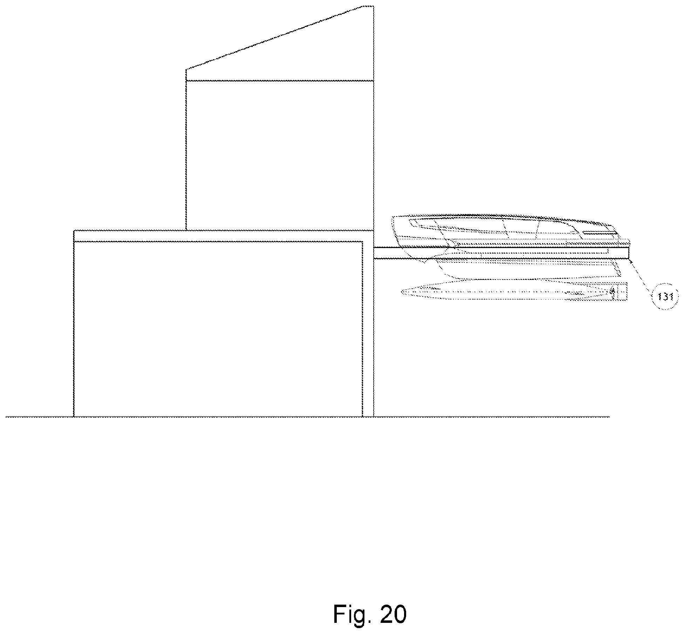

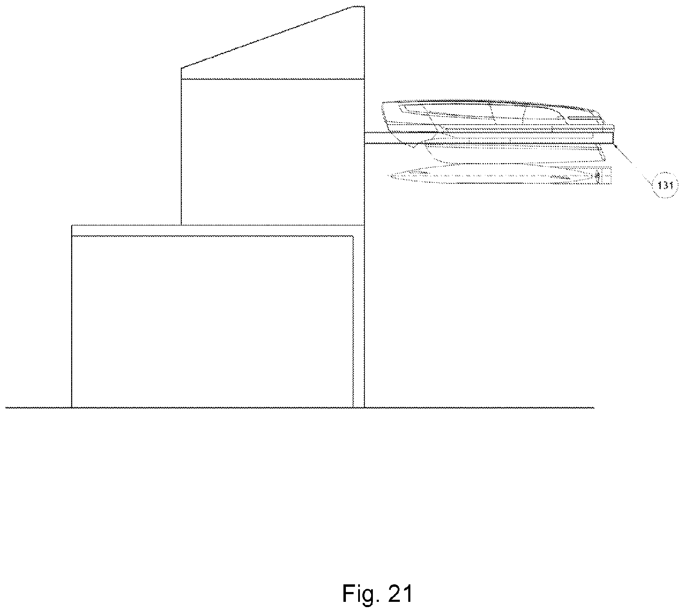

- Figs. 20,21 show an embodiment of the invention where the vessel is smaller and the rails carry out the function of forks of a forklift to lift the vessel.

With reference to the accompanying drawings, it should be noted that the integrated system is generally identified with 30, the vessel with 10, the quick-release coupling system with 50, and the movable arm for the displacement of the pylon and the submerged body with 70.

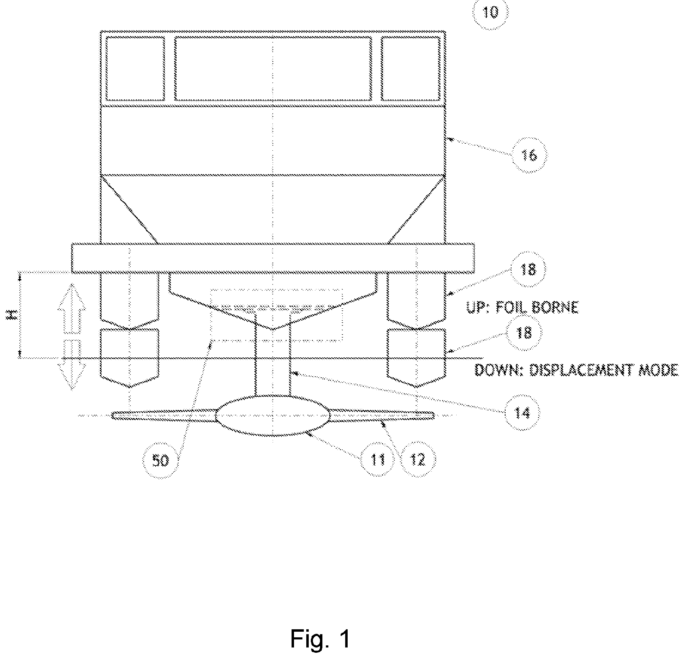

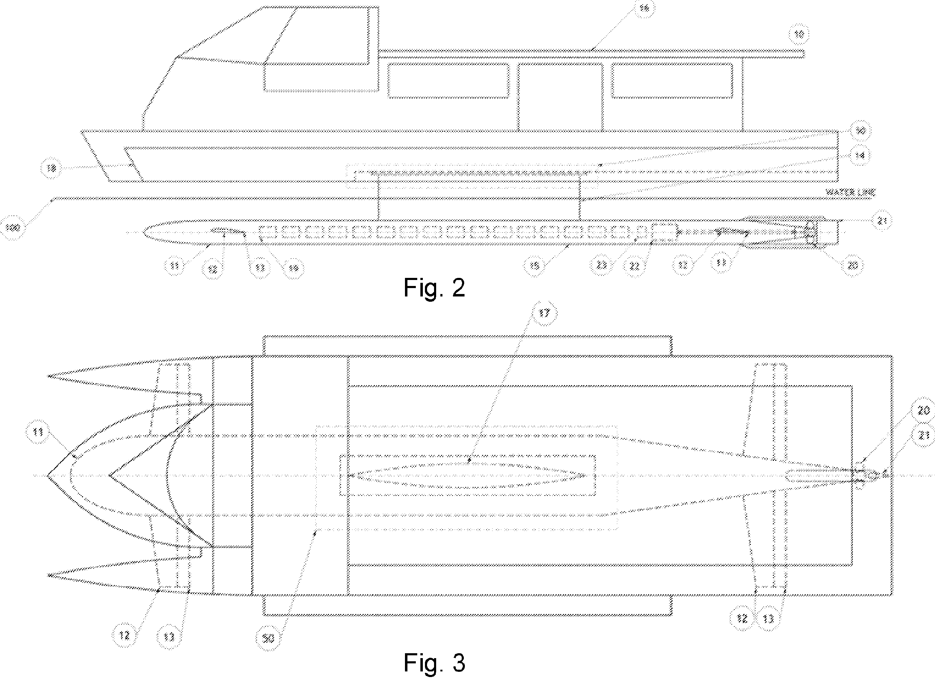

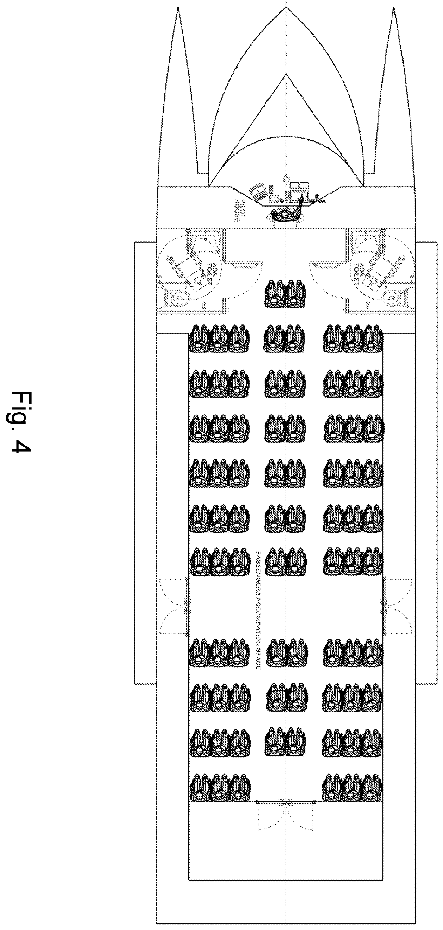

With particular reference to figures 1 to 4, the vessel comprises a submerged body 11, provided with wings 12, which can be totally movable or partly fixed and provided with a flap 13 on the trailing edge of the wings, a pylon 14 which connects the lower part of the vessel 15 to the upper one 16, provided among other things with a very reduced floating surface 17, the upper part of the vessel 16, movable bodies 18 (or side hulls) capable of moving downwards or upwards, and maintaining the upper part of the vessel at a fixed height even at low speeds or with a fixed vessel. Upon departure, the upper part of the vessel is kept raised by the lateral bodies appropriately moved downwards. Once the floating bodies are lowered, they oscillate around a position of equilibrium and are responsible for the stability of the upper part of the vessel. A control system provided with inertial and height sensors determines the position of the vessel with respect to the floating surface and its inclination in the transverse (roll) and longitudinal (pitch) direction. When the vessel 10 is stationary, as a function of the position of the upper part 16, with respect to the sea surface, the control system manages the position of the floating bodies 18 in order to maintain the upper part of the vessel 16 at a predetermined height and in a horizontal position. The heeling effect of the waves is thus contrasted by the action of the floating bodies 18 which immerse or rise so as to modulate the contrasting force. When the vessel is in motion, and exceeds the take-off speed, it is instead the wings which support the weight of the vessel instead of the floating bodies, and the control system manages the angular position of the wings 12 (if totally movable) or flaps 13 (if partially fixed), so as to modulate the hydrodynamic lift on each thereof and keep the vessel at a fixed height in a horizontal position. In this case, the heeling effect of the waves is contrasted by the modulation of the hydrodynamic lift on the wings.

In addition to the wings, the vessel has other appendages such as the propulsive propeller 20, and the rudder 21.

In a preferred configuration the batteries 19, the propulsion motor 22 and its driver 23, the wing and rudder actuation system, the power electronics for actuator control, all the necessary auxiliary systems (cooling system, bilge pumps, fans and extractors) are housed in the torpedo. The feature of the vessel, which flies at a fixed height in all sea and speed conditions, allows it to dock safely and gently on a platform. In a preferential but not exclusive solution, the landing station 30 consists of two rails 31 placed at a height such as to allow the vessel to rest thereon above the flight height. The vessel 10 approaches the station supported by the wings 12, slows down and lowers the floating bodies 18, continuing low-speed navigation at the same flight height until resting on the rails 31. If necessary, the floating bodies raise or lower the vessel in order to land accurately and without bumps on the rails. At this point the passengers 32 can disembark in the first section of the station and move away 33. Once the passengers have disembarked, the crew, acting on the quick-coupling system 50, release the pylon 14 and the submerged body (torpedo-shaped) 11 with the wings 12 resting on a saddle 34. Once released, the pylon 14 and the submerged body 11, the vessel 10 advances on the rail 31 up to the section 35 of the next station, the passenger boarding station. In the next station there is a pylon 14 and a submerged body 11, inside which there are the charged batteries 19. The pylon and the submerged body are resting on a saddle 34. The crew on-board, by means of the quick-coupling system 50, connects the rest of the vessel 16 to the pylon 14 and to the submerged body 11. Once the two parts are fixed, the waiting passengers 32 can board and the vessel frees the landing station 30. At this point, an arm 70 placed on a trolley 71 which moves between the two sections 33 and 35, engages the pylon 11 and the submerged body 14 containing the discharged batteries, exploiting the same quick-coupling system 50 used to fix it to the vessel. Once engaged to the arm, the charging process can begin, and furthermore the submerged body 11 and the pylon 14 can be lifted out of the water to be cleaned or to proceed with other maintenance activities. Before the next vessel arrives, the pylon and the submerged body are placed in the second section of the landing station, always exploiting the arm 70.

In a preferred but not exclusive solution, the quick-coupling system consists of a flange placed in the upper part of the pylon 51, with a certain number of tie rods 52. The tie rods are of the captive type, in other words once the bolt has been removed they can descend, until the flange 54 is released on the vessel, and allow the vessel to advance, but not fall away, separating from the flange of the pylon 51. In a preferred version, the impossibility of loss is ensured by a seeger ring 65 placed in the middle of the stem of the tie rod. A peripheral gasket 53 is placed on the flange to ensure the watertightness of the coupling. There is a perforated flange 54 on the vessel, which couples with the flange on the pylon 51. The tie rods enter the vessel through the holes of the flange 54 and are fixed with nuts 55 and washers 56. All the connectors 57, male on the pylon 58, female on the vessel 59 or vice versa, are placed on in the centre of the flange for the electrical or hydraulic connections of the cables and pipes 66. To lift the captive tie rods and allow the nuts to be screwed from the upper part only, the crew on-board can use a special tool 60 from inside the vessel, or the tie rods can be lifted by an automatic system once the vessel is placed above the pylon flange. In the engagement step, by pulling the nuts 55 on the tie rods 52, the flange of the pylon 51 goes to crush the gasket 53 on the flange of the vessel 54, forcing the male connectors 58 to engage the female connectors 59. Each tie rod is provided with a square section 61 which couples with a square seat in the flange 62. This allows the nut to be screwed only from above the vessel, because it is thereby unnecessary to hold the tie rod with a wrench from below the vessel. A gasket 63 below the head of the tie rod prevents water from entering when the tie rod is normally tightened. The quick-coupling system connects the pylon to the vessel mechanically, and at the same time connects both the power cables for charging the battery, and the signal cables for actuating the wing system, the rudder, the propulsion engine and all the necessary auxiliary systems which are housed in the submerged body. During the release step, by unscrewing the nuts, the pylon and the submerged body are lowered until they rest on the saddle. Once the pylon and submerged body are safely on the saddle, it is possible to remove the nuts and let the tie rods drop, which will still be retained by the seeger ring.

In a subsequent configuration, the lower part of the vessel can be kept fixed to the upper part but the batteries can be replaced by means of a conveyor belt 101 contained in a movable pipe 102 which exits from the jetty of the station and whose movable end adheres to the submerged body, at a hatch 103, interposing a gasket 104. Between the movable pipe and the jetty wall there is a gasket 105 and a guide 106 for ensuring alignment and watertightness. Once the seal is made between the pipe and the submerged body, the pipe is emptied of water and the hatch can be opened, allowing access to the submerged body to replace the batteries.

In a subsequent configuration, another pipe 107 exits from the bottom of the station and adheres to the submerged body at a hatch 108 in the lower part. The charged batteries are removed through the hatch on the bottom, with the aid of a vertical conveyor belt 109, while those charged are inserted laterally, so as not to cross the path and reduce the replacement time.

The vertical pipe also adheres to the submerged body, interposing a gasket 110, while between the bottom and the pipe there is a guide 112 and a gasket 111.

In a subsequent configuration, the size of the vessel is smaller (for example, it could have the size of a yacht tender of 7-10 metres and a capacity of 12 passengers) and the two rails 131 can be positioned perpendicular to the mooring station, i.e., to the ship, like the forks of a forklift. The vessel can only rise on the two forks and be lifted to replace the batteries or the entire lower part, consisting of submerged body and central pylon.

## Claims

1. Integrated maritime transport system with embarkation, disembarkation and rapid propulsion unit and energy storage replacement station, comprising:
- a hybrid or full-electric propulsion vessel (10) provided with one or more submerged torpedo-shaped bodies (11) containing both the propulsion (20, 22, 23) and control apparatus, as well as energy storage devices, whether stored in tanks or batteries, in addition to containing auxiliary systems,
- an upper platform of the vessel (10), connected to said torpedo-shaped body (11) by means of one or more pylons (14), on which the passengers or goods are housed,
- one or more movable floating bodies (18) capable of moving and lifting the vessel (10) even at low speeds or when the vessel is stationary,
- one or more stations for embarking, disembarking, and changing the torpedo-shaped body (11)
comprising:
- a quick-release system (50) of the pylon or submerged torpedo-shaped body (11),
- a device at which the platform of the vessel rests prior to the release operation of the torpedo-shaped body (11),
- a saddle (34) for receiving said torpedo-shaped bodies (11) and possibly the relative pylons (14), when they are released from the platform,
- a second saddle for accommodating the submerged torpedo-shaped body (11) and the replacement pylon (14), before being engaged again to the next vessel (10),
- a system for moving the vessel (10) from the release station to that of engagement,
- a system for the quick coupling (50) and movement of the pylon (14) and the submerged body (11) from the release station, to the engagement station,
- a system for charging the batteries (19).

2. System according to claim 1, **characterized in that** the vessel is provided with one or more wings (12) which are completely movable or partly fixed and provided with flaps (13) on the trailing edge, capable of supporting the vessel (10) at the flight height once the take-off speed has been exceeded.

3. System according to claim 1, **characterized in that** the platform on which the vessel (10) rests consists of two rails (31) on which trolleys which transport the vessel (10) slide from the section of unloading goods or passengers, to the section of loading goods or passengers.

4. System according to claim 1, **characterized in that** the quick-coupling system (50) consists of an upper flange (51) placed in the upper part of the pylon (14) provided with captive tie rods (51), and a perforated flange (54) placed in the vessel (10), pulling with nuts the tie rods (52) from the upper part of the vessel (10) the flange and pressing a gasket and forcing the electrical connections to engage, the tie rods (52) being provided with a square part for tightening them from the upper part of the vessel and a gasket for sealing against the entrance of water.

5. System according to claim 1, **characterized in that** it has a trolley which slides on rails (31), placed in the upper part of the landing (30), which moves an extendable arm (70) capable of engaging the upper flange (51) of the pylon (14), such a system allowing both the lifting and the displacement of the pylon (14) and of the submerged body (11) from a first saddle to another, and the engagement of the electrical connections and consequently charging the batteries (19) and downloading data for maintenance.

6. Integrated system according to claim 1 or claim 3, **characterized in that** the captive tie rods (52) are lifted with a special tool from inside the vessel.

7. System according to claim 1 or claim 3, **characterized in that** the captive tie rods (52) are lifted with an automatic system.

8. System according to claim 1, provided with a manual or robotic system for changing only the battery pack consisting of one or more movable pipe arms which rest on the torpedo-shaped body (11), expelling water where submerged, and moving both the used and the new charged battery pack therein.

9. System according to one or more of the preceding claims, **characterized in that** the vessel is moved by a fork retaining system which lifts and maintains the platform of the vessel in a determined and emerged position, moving the replacement torpedo-shaped body (11).

10. System according to one or more of the preceding claims, wherein said embarkation, disembarkation and rapid replacement station consists of a compartment obtained inside a further vessel, which compartment comprises one or more functional units aimed at the movement and/or operation of said hybrid or full-electric propulsion vessel.

## Patentansprüche

1. Integriertes Seetransportsystem mit einer Einschiffungs-, Ausschiffungs- und Schnellaustauschstation für die Antriebseinheit und den Energiespeicher, umfassend:
- ein Wasserfahrzeug (10) mit Hybrid- oder vollelektrischem Antrieb, das mit einem oder mehreren untergetauchten torpedoförmigen Körpern (11) versehen ist, die sowohl den Antrieb (20, 22, 23) und die Steuervorrichtung als auch Energiespeichervorrichtungen, ob in Tanks oder Batterien gespeichert, enthalten und darüber hinaus Hilfssysteme enthalten,
- eine obere Plattform des Wasserfahrzeugs (10), die mit dem genannten torpedoförmigen Körper (11) mittels eines oder mehrerer Pylone (14) verbunden ist und auf der die Passagiere oder Güter untergebracht sind,
- einen oder mehrere bewegliche Schwimmkörper (18), die in der Lage sind, das Wasserfahrzeug (10) auch bei niedrigen Geschwindigkeiten oder bei stillstehendem Wasserfahrzeug zu bewegen und anzuheben,
- eine oder mehrere Stationen zum Einschiffen, Ausschiffen und Wechseln des torpedoförmigen Körpers (11), umfassend:
- ein Schnelllösesystem (50) des Pylons oder des untergetauchten torpedoförmigen Körpers (11),
- eine Vorrichtung, an der die Plattform des Wasserfahrzeugs vor dem Lösevorgang des torpedoförmigen Körpers (11) aufliegt,
- einen Sattel (34) zur Aufnahme der genannten torpedoförmigen Körper (11) und gegebenenfalls der zugehörigen Pylone (14), wenn diese von der Plattform gelöst werden,
- einen zweiten Sattel zur Aufnahme des untergetauchten torpedoförmigen Körpers (11) und des Ersatzpylons (14), bevor diese wieder mit dem nächsten Wasserfahrzeug (10) gekoppelt werden,
- ein System zum Bewegen des Wasserfahrzeugs (10) von der Lösestation zur Kopplungsstation,
- ein System zur Schnellkupplung (50) und zum Bewegen des Pylons (14) und des untergetauchten Körpers (11) von der Lösestation zur Kopplungsstation,
- ein System zum Laden der Batterien (19).

2. System nach Anspruch 1, **dadurch gekennzeichnet, dass** das Wasserfahrzeug mit einem oder mehreren Flügeln (12) versehen ist, die vollständig beweglich oder teilweise feststehend und mit Klappen (13) an der Hinterkante versehen sind und in der Lage sind, das Wasserfahrzeug (10) auf der Flughöhe zu tragen, sobald die Abhebegeschwindigkeit überschritten ist.

3. System nach Anspruch 1, **dadurch gekennzeichnet, dass** die Plattform, auf der das Wasserfahrzeug (10) aufliegt, aus zwei Schienen (31) besteht, auf denen Wagen, die das Wasserfahrzeug (10) transportieren, vom Abschnitt zum Entladen von Gütern oder Passagieren zum Abschnitt zum Beladen von Gütern oder Passagieren gleiten.

4. System nach Anspruch 1, **dadurch gekennzeichnet, dass** das Schnellkupplungssystem (50) aus einem oberen Flansch (51), der im oberen Teil des Pylons (14) angeordnet und mit unverlierbaren Zugankern (51) versehen ist, und einem perforierten Flansch (54), der im Wasserfahrzeug (10) angeordnet ist, besteht, wobei durch Anziehen der Zuganker (52) mit Muttern vom oberen Teil des Wasserfahrzeugs (10) aus der Flansch gezogen und eine Dichtung angepresst und die elektrischen Verbindungen zum Eingriff gezwungen werden, wobei die Zuganker (52) mit einem viereckigen Teil zum Anziehen vom oberen Teil des Wasserfahrzeugs aus und mit einer Dichtung zum Abdichten gegen das Eindringen von Wasser versehen sind.

5. System nach Anspruch 1, **dadurch gekennzeichnet, dass** es einen Wagen aufweist, der auf im oberen Teil der Anlegestelle (30) angeordneten Schienen (31) gleitet und einen ausfahrbaren Arm (70) bewegt, der in der Lage ist, mit dem oberen Flansch (51) des Pylons (14) in Eingriff zu treten, wobei ein solches System sowohl das Anheben und Verschieben des Pylons (14) und des untergetauchten Körpers (11) von einem ersten Sattel zu einem anderen als auch das Herstellen der elektrischen Verbindungen und folglich das Laden der Batterien (19) und das Herunterladen von Daten zur Wartung ermöglicht.

6. Integriertes System nach Anspruch 1 oder Anspruch 3, **dadurch gekennzeichnet, dass** die unverlierbaren Zuganker (52) mit einem Spezialwerkzeug vom Inneren des Wasserfahrzeugs aus angehoben werden.

7. System nach Anspruch 1 oder Anspruch 3, **dadurch gekennzeichnet, dass** die unverlierbaren Zuganker (52) mit einem automatischen System angehoben werden.

8. System nach Anspruch 1, versehen mit einem manuellen oder robotergestützten System zum Wechseln allein des Batteriepakets, das aus einem oder mehreren beweglichen Rohrarmen besteht, die auf dem torpedoförmigen Körper (11) aufliegen, wobei sie dort, wo er untergetaucht ist, Wasser verdrängen und sowohl das gebrauchte als auch das neue geladene Batteriepaket darin bewegen.

9. System nach einem oder mehreren der vorhergehenden Ansprüche, **dadurch gekennzeichnet, dass** das Wasserfahrzeug durch ein Gabelhaltesystem bewegt wird, das die Plattform des Wasserfahrzeugs in einer bestimmten und aufgetauchten Position anhebt und hält, wobei es den torpedoförmigen Ersatzkörper (11) bewegt.

10. System nach einem oder mehreren der vorhergehenden Ansprüche, wobei die genannte Einschiffungs-, Ausschiffungs- und Schnellaustauschstation aus einem Abteil besteht, das im Inneren eines weiteren Wasserfahrzeugs ausgebildet ist, wobei dieses Abteil eine oder mehrere Funktionseinheiten umfasst, die auf das Bewegen und/oder den Betrieb des genannten Wasserfahrzeugs mit Hybrid- oder vollelektrischem Antrieb gerichtet sind.

## Revendications

1. Système de transport maritime intégré avec une station d'embarquement, de débarquement et de remplacement rapide de l'unité de propulsion et du stockage d'énergie, comprenant :
- un navire (10) à propulsion hybride ou entièrement électrique pourvu d'un ou plusieurs corps submergés en forme de torpille (11) contenant à la fois la propulsion (20, 22, 23) et l'appareil de commande, ainsi que des dispositifs de stockage d'énergie, qu'ils soient stockés dans des réservoirs ou des batteries, et contenant en outre des systèmes auxiliaires,
- une plateforme supérieure du navire (10), reliée audit corps en forme de torpille (11) au moyen d'un ou plusieurs pylônes (14), sur laquelle sont logés les passagers ou les marchandises,
- un ou plusieurs corps flottants mobiles (18) capables de déplacer et de soulever le navire (10) même à basse vitesse ou lorsque le navire est à l'arrêt,
- une ou plusieurs stations d'embarquement, de débarquement et de changement du corps en forme de torpille (11), comprenant :
- un système à libération rapide (50) du pylône ou du corps submergé en forme de torpille (11),
- un dispositif sur lequel repose la plateforme du navire avant l'opération de libération du corps en forme de torpille (11),
- une selle (34) destinée à recevoir lesdits corps en forme de torpille (11) et éventuellement les pylônes correspondants (14), lorsqu'ils sont libérés de la plateforme,
- une seconde selle destinée à recevoir le corps submergé en forme de torpille (11) et le pylône de remplacement (14), avant d'être de nouveau accouplés au navire suivant (10),
- un système pour déplacer le navire (10) de la station de libération à celle d'accouplement,
- un système pour l'accouplement rapide (50) et le déplacement du pylône (14) et du corps submergé (11) de la station de libération à la station d'accouplement,
- un système pour charger les batteries (19).

2. Système selon la revendication 1, **caractérisé en ce que** le navire est pourvu d'une ou plusieurs ailes (12) qui sont entièrement mobiles ou en partie fixes et pourvues de volets (13) sur le bord de fuite, capables de soutenir le navire (10) à la hauteur de vol une fois que la vitesse de décollage a été dépassée.

3. Système selon la revendication 1, **caractérisé en ce que** la plateforme sur laquelle repose le navire (10) est constituée de deux rails (31) sur lesquels des chariots qui transportent le navire (10) glissent de la section de déchargement des marchandises ou des passagers à la section de chargement des marchandises ou des passagers.

4. Système selon la revendication 1, **caractérisé en ce que** le système d'accouplement rapide (50) est constitué d'une bride supérieure (51) placée dans la partie supérieure du pylône (14) et pourvue de tirants imperdables (51), et d'une bride perforée (54) placée dans le navire (10), en tirant avec des écrous les tirants (52) depuis la partie supérieure du navire (10) la bride et en pressant un joint et en forçant les connexions électriques à s'engager, les tirants (52) étant pourvus d'une partie carrée pour les serrer depuis la partie supérieure du navire et d'un joint pour assurer l'étanchéité contre l'entrée d'eau.

5. Système selon la revendication 1, **caractérisé en ce qu'**il comporte un chariot qui glisse sur des rails (31), placés dans la partie supérieure du débarcadère (30), lequel déplace un bras extensible (70) capable de s'engager avec la bride supérieure (51) du pylône (14), un tel système permettant à la fois le levage et le déplacement du pylône (14) et du corps submergé (11) d'une première selle à une autre, ainsi que l'engagement des connexions électriques et par conséquent la charge des batteries (19) et le téléchargement de données pour la maintenance.

6. Système intégré selon la revendication 1 ou la revendication 3, **caractérisé en ce que** les tirants imperdables (52) sont soulevés à l'aide d'un outil spécial depuis l'intérieur du navire.

7. Système selon la revendication 1 ou la revendication 3, **caractérisé en ce que** les tirants imperdables (52) sont soulevés à l'aide d'un système automatique.

8. Système selon la revendication 1, pourvu d'un système manuel ou robotisé pour changer uniquement le bloc-batterie, constitué d'un ou plusieurs bras tubulaires mobiles qui reposent sur le corps en forme de torpille (11), en expulsant l'eau là où il est submergé, et en y déplaçant à la fois le bloc-batterie usagé et le nouveau bloc-batterie chargé.

9. Système selon une ou plusieurs des revendications précédentes, **caractérisé en ce que** le navire est déplacé par un système de retenue à fourche qui soulève et maintient la plateforme du navire dans une position déterminée et émergée, en déplaçant le corps en forme de torpille de remplacement (11).

10. Système selon une ou plusieurs des revendications précédentes, dans lequel ladite station d'embarquement, de débarquement et de remplacement rapide est constituée d'un compartiment obtenu à l'intérieur d'un autre navire, lequel compartiment comprend une ou plusieurs unités fonctionnelles destinées au déplacement et/ou au fonctionnement dudit navire à propulsion hybride ou entièrement électrique.
